# EUROPEAN PATENT APPLICATION

(11) **EP 4 467 673 A1**
(43) Date of publication of application: **27.11.2024**
(21) Application number: 24173737.8
(22) Date of filing: 02.05.2024
(51) Int. Cl.: C22B 26/12, B01D 61/02, C01D 15/08, H01M 10/54

(54) **SYSTEM FOR RECOVERING LITHIUM OF WASTE CATHODE MATERIAL**

(30) Priority: 25.05.2023 KR 20230067744
(71) Applicant: Doosan Enerbility Co., Ltd., Seongsan-gu Changwon-si, Gyeongsangnam-do 51711 (KR)
(72) Inventor: You, Jang Yong, Suwon-si (KR); Shin, Kwang Hee, Suseong-gu (KR); Lee, Jin Woon, Seongnam-si (KR); Jo, Ho Yong, Yongin-si (KR)
(74) Representative: Ter Meer Steinmeister & Partner

(57) **Abstract**

Disclosed is a system for recovering lithium of a waste cathode material, including: a heat-treating unit configured to heat-treat a waste cathode material to convert into soluble and insoluble materials; a water-leaching unit configured to leach the heat-treated waste cathode material with water to separate into an insoluble material and a water-leached solution comprising a lithium ion and a carbonate ion; and an reverse osmosis (RO) concentration unit configured to concentrate the water-leached solution using reverse osmosis, and a concentration of a lithium ion in the water-leached solution which is separated from the water-leaching unit may be 2,000 ppm or less.

## Description

The present application claims priority to Korea Patent Application No. 10-2023-0067744, filed May 25, 2023.

### FIELD

The present disclosure relates to a system for recovering lithium of a waste cathode material, more particularly, to a system for recovering lithium of a waste cathode material capable of improving a recovery rate of lithium and preventing scaling of the reverse osmosis membrane by using RO concentration, while decreasing the energy consumption.

### BACKGROUND

In the process of manufacturing a cathode material for a secondary battery, a substantial amount of defective or scrap cathode material is typically generated. Efforts have been made to recover transition metals, including lithium, from this waste cathode material.

In a method of recovering lithium carbonate or lithium hydroxide from waste cathode materials such as LCO (i.e., lithium/cobalt) through heat treatment, the waste cathode materials undergo heat-treatment process.

When the lithium carbonate compound (S) produced in this way is washed with water, the lithium carbonate compound is separated into a solid transition metal material (e.g., Ni/Mn/Co/Al) and a liquid lithium carbonate (L), and the separated liquid lithium carbonate (L) is evaporated/concentrated to obtain high-purity lithium carbonate (S). In addition, lithium hydroxide can also be obtained by reacting the separated liquid lithium carbonate with metal hydroxide and then evaporating/concentrating it.

As described above, the method of evaporation/concentration is generally used in obtaining the high-purity lithium carbonate; however, the method of evaporation/concentration consumes a large amount of energy.

### SUMMARY

An object of the present disclosure is to provide a system for recovering lithium of a waste cathode material, which is capable of improving a recovery rate of lithium and preventing scales of the reverse osmosis membrane by using RO concentration, while decreasing the energy consumption.

The object is solved by the features of the independent claim. The technical problem to be achieved by the present disclosure is not limited to the above-mentioned technical problem, and other technical problems that are not mentioned will be clearly understood by ordinary-skilled persons in the art to which the present disclosure pertains from the following description.

According to one aspect, a system for recovering lithium of a waste cathode material includes: a heat-treating unit configured to heat-treat a waste cathode material to convert into soluble and insoluble materials; a water-leaching unit configured to leach the heat-treated waste cathode material with water to separate into an insoluble material and a water-leached solution comprising a lithium ion and a carbonate ion; and an reverse osmosis (RO) concentration unit configured to concentrate the water-leached solution using reverse osmosis. A concentration of a lithium ion in the water-leached solution which is separated from the water-leaching unit may be 2,000 ppm or less.

According to a further aspect, a system for recovering lithium of a waste cathode material includes: a heat-treating unit configured to heat-treat a waste cathode material to convert the waste cathode material into heat-treated waste cathode material including (or consisting of) soluble and insoluble materials; a water-leaching unit configured to leach the heat-treated waste cathode material with water to separate the heat-treated waste cathode material into an insoluble material and a water-leached solution comprising lithium ions and carbonate ions; and a reverse osmosis (RO) concentration unit configured to concentrate the water-leached solution using reverse osmosis. The water-leaching unit may be configured to separate the water-leached solution with a concentration of lithium ions of 2,000 ppm or less. That is, the concentration of lithium ions in the water-leached solution which is separated from the water-leaching unit may be 2,000 ppm or less.

The system according to any one of these aspects may include one or more of the following features:
In the water-leaching unit, a powder of the waste cathode material which is heat-treated in the heat-treating unit may be water-leached with water at a weight ratio of 1:30 to 1:100.

A gas containing carbon dioxide may be supplied to the water-leached solution. That is, the system may be configured to supply a gas containing carbon dioxide to the water-leached solution.

The gas containing carbon dioxide may be a flue gas which is generated in and/or discharged from the heat-treating unit. The system may be configured to supply the gas containing carbon dioxide and/or the flue gas from the heat-treating unit to the water-leached solution and/or to the water-leaching unit.

The flue gas may pass through a dust collecting device before being supplied to the water-leached solution. That is, the system may include a dust collecting device provided between the heat-treating unit and one of the water-leaching unit and the water-leached solution in order to allow flue gas and/or the gas containing carbon dioxide to pass therethrough.

A pH of the water-leached solution separated in the water-leaching unit may be equal to or less than 10. A pH of the water-leached solution to which the gas containing carbon dioxide is supplied may be equal to or less than 10. A pH of the water-leached solution before the gas containing carbon dioxide is supplied may be equal to or less than 10.

In the RO concentration unit, a lithium ion may be concentrated to 3,000ppm or more. That is, the RO concentration unit may be configured to increase a concentration of lithium ions to 3,000 ppm or more.

The RO concentration unit may include a first reverse osmosis device and a second reverse osmosis device. When reverse osmosis is performed in one among the first reverse osmosis device and the second reverse osmosis device, flushing may be performed in a remaining reverse osmosis device. That is, when reverse osmosis is performed in one of the first reverse osmosis device and the second reverse osmosis device, the RO concentration unit may be configured to flush the other reverse osmosis device.

Permeate which is used for reverse osmosis in the RO concentration unit may be supplied to the water-leaching unit.

The system for recovering lithium of a waste cathode material may further include: a crystallization unit configured to increase a temperature of concentrated solution which is concentrated in the RO concentration unit to crystallize lithium carbonate. A crystallization filtrate which is not crystallized in the crystallization unit may be merged with the water-leached solution discharged from the water-leaching unit and then may be supplied to the RO concentration unit. That is, the system may be configured to merge or combine a crystallization filtrate which is not crystallized in the crystallization unit with the water-leached solution discharged from the water-leaching unit. The system may be further configured to supply the crystallization filtrate merged with the water-leached solution to the RO concentration unit.

The system for recovering lithium of a waste cathode material may further include: a heat exchange unit configured to allow heat exchange to be performed between the crystallization filtrate and the concentrated solution discharged from the RO concentration unit.

The system for recovering lithium of a waste cathode material may further include a separation unit configured to perform solid-liquid separation of the lithium carbonate crystallized in the crystallization unit and the crystallization filtrate.

The system for recovering lithium of a waste cathode material may further include a merging part at which the crystallization filtrate is merged with the water-leached solution discharged from the water-leaching unit.

The system for recovering lithium of a waste cathode material may further include a main flow path through which the crystallization filtrate flows from the separation unit to the merging part.

The system for recovering lithium of a waste cathode material may further include a bypass flow path branched from the main flow path. The system for recovering lithium of a waste cathode material may further include an ion exchange resin provided in the bypass flow path.

A portion of the crystallization filtrate separated in the separation unit may be supplied to the bypass flow path, passes through the ion exchange resin, and then merged with the water-leached solution.

The system for recovering lithium of a waste cathode material may further include: a micro filter provided between the water-leaching unit and the RO concentration unit.

The crystallization filtrate may be cooled in the heat exchange unit to 40°C or lower.

According to the present disclosure, the recovery rate of lithium may be improved while decreasing energy consumption, by using the RO concentration as a method for concentrating a water leached solution.

In addition, concentration multiples may be increased and the scaling of the reverse osmosis membrane may be prevented by supplying a gas containing carbon dioxide to the water leached solution so as to lower a pH.

Further, the scaling of the reverse osmosis membrane may be prevented by configuring the RO concentration unit with the first reverse osmosis device and the second reverse osmosis device and operating the first reverse osmosis device and the second reverse osmosis device alternately.

Moreover, by including the heat exchange unit and having the crystallization filtrate and the concentrated solution perform heat exchange each other in the heat exchange unit, the crystallization filtrate is cooled to satisfy the reference temperature before being introduced into the RO concentration unit, and the concentrated solution is heated to reduce the energy necessary for the crystallization.

In addition, since at least a portion of the crystallization filtrate passes through the ion exchange resin and is introduced into the RO concentration unit, the suppression of the increase of impurities which occurs because of the reuse is achieved.

The effects of the embodiments of the present disclosure are not limited to the above-mentioned effects, and it should be understood that the effects of the present disclosure include all effects that could be inferred from the configuration of the invention described in the detailed description of the invention or the appended claims.

### BRIEF DESCRIPTION OF THE DRAWINGS

FIG. 1 is a configuration diagram illustrating a configuration of the system for recovering lithium of a waste cathode material according to a first embodiment of the present disclosure,
FIG. 2 is a configuration diagram illustrating a configuration of an RO concentration unit of FIG. 1 in detail,
FIG. 3 is a configuration diagram illustrating a configuration of a system for recovering lithium of a waste cathode material according to a second embodiment of the present disclosure, and
FIG. 4 is a configuration diagram illustrating a configuration of a system for recovering lithium of a waste cathode material according to a third embodiment of the present disclosure.

### DETAILED DESCRIPTION

Hereinafter, preferred embodiments of a system for recovering lithium of a waste cathode material will be described with reference to the accompanying drawings.

Further, terms, as will be mentioned hereinafter, are terms defined in consideration of their function in the present invention, which may be varied according to the intention of a user, practice, or the like. The following embodiments are merely examples of components described in claims, and should not be interpreted as limiting the scope of the present invention.

In the accompanying drawings, portions unrelated to the description will be omitted in order to clearly describe the present invention, and similar reference numerals will be used to describe similar portions throughout the present specification. Throughout the present specification, unless explicitly described otherwise, "comprising" any components will be understood to imply the inclusion of other components rather than the exclusion of any other components.

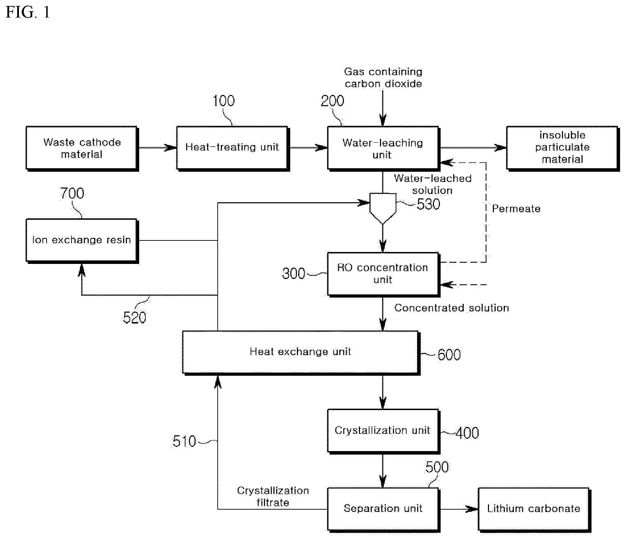

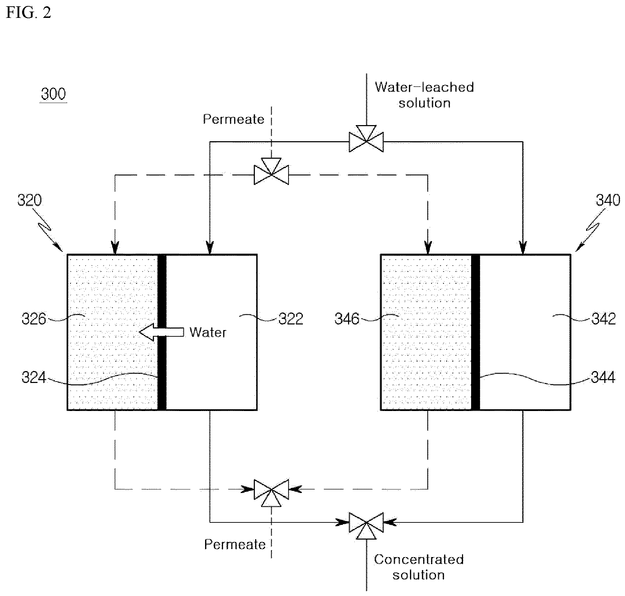

First, a system for recovering lithium of a waste cathode material according to a first embodiment of the present disclosure will be described with reference to FIGS. 1 and 2.

The system for recovering lithium of a waste cathode material may include a heat-treating unit 100, a water-leaching unit 200, an RO concentration unit 300, a crystallization unit 400, a separation unit 500, a heat exchange unit 600, and an ion exchange resin 700.

The heat-treating unit 100 is configured to heat-treat a waste cathode material to convert the waste cathode material into soluble and insoluble materials. Here, the waste cathode material is not specifically limited, and may include various forms such a waste cathode material, cathode material scraps, stacks and batteries containing lithium that are discarded due to defects or depletion.

By the heat treatment of the waste cathode material, soluble materials such as lithium carbonate (Li2CO3), lithium oxide (Li2O), and lithium hydroxide (LiOH) may be generated. Also, insoluble materials such as an nickel oxide, a cobalt oxide, an manganese oxide, and similar compounds may be generated. Depending on the methods and conditions of the heat treatment, the content of each component may vary.

According to an embodiment, the heat-treating unit 100 may include a heat-treating furnace, wherein the heat-treating furnace may utilize a hydrocarbon fluid for combustion inside the heat treatment furnace. This combustion heats the interior of the heat-treating furnace, thereby creating a carbon dioxide atmosphere due to the presence of the carbon dioxide in the emission gases generated during the burning of the hydrocarbon fluid. Therefore, when a powder of waste cathode material containing lithium is introduced into the interior of the heat-treating furnace, it may react with the carbon dioxide present in the emission gases. However, the present disclosure is not limited to this process, and an additional carbon dioxide gas may be injected into the interior of the heat-treating furnace.

The water-leaching unit 200 is configured to leach the heat-treated waste cathode material with water to separate into an insoluble particulate material and a water-leached solution. This water-leached solution may contain various components including a lithium ion, a carbonate ion, and other relevant substances. That is, the water-leaching unit 200 dissolves the soluble material by water-leaching the powder of the heat-treated waste cathode material. The separated water-leached solution is supplied to the RO concentration unit 300, which is to be described later. The water being used for the leaching process may be the distilled water.

During the process, it is preferrable for the concentration of a lithium ion within the water-leached solution, which has been separated in the water-leaching unit 200, to be 2,000 ppm or less. This concentration ensures that the amount of eluted lithium is maximized.

The concentration of the lithium ion within the water-leached solution may vary depending on the weight ratio between the powder of the heat-treated waste cathode material and water used for water-leaching in the water-leaching unit 200. For reference, the table 1 provides the concentration of the lithium ion contained in the water-leached solution and the amount of lithium eluted, when conducting water leaching 1 kg of the same heat-treated powder with 20kg, 30kg, 50kg, and 100kg of water, respectively. According to the table 1, when the weight ratio between the heat-treated powder and the water is 1:20 and 1:30, the concentrations of the lithium ion are similar, and the amount of eluted lithium increases by about 1.5 times. On contrary, when the weight ratio between the heat-treated powder and the water is 1:50 and 1:100, despite a significant increase in water volume, the amount of the eluted lithium does not increase substantially compared to the 1:30 weight ratio, due to the lowered lithium ion concentration.

**[Table 1]**

| Heat-treated powder (kg) | Water (kg) | Li(mg/L) | Eluted lithium (mg) |
|---|---|---|---|
| 1 | 20 | 2,241 | 44,820 |
| 1 | 30 | 2,249 | 67,466 |
| 1 | 50 | 1,431 | 71,574 |
| 1 | 100 | 733 | 73,312 |

As such, when the concentration of the lithium ion contained in the water-leached solution is equal to or less than 2,000ppm, the amount of the eluted lithium is maximized, and the recovery rate of the lithium can be improved.

In particular, in the water-leaching unit 200, it is preferable for the powder of the waste cathode material, which has undergone heat treatment in the heat-treating unit 100, to be water-leached with water at a weight ratio ranging from 1:30 to 1:100.

The RO concentration unit 300 concentrates the water-leached solution by using the reverse osmosis (RO). As illustrated in FIG. 2, the RO concentration unit 300 according to the present embodiment includes a first reverse osmosis device 320 and a second reverse osmosis device 340. The scaling of the reverse osmosis membrane can be prevented by alternately operating the first reverse osmosis device 320 and the second reverse osmosis device 340.

In more detail, the first reverse osmosis device 320 includes a first concentration chamber 322 to which the water-leached solution is supplied, a first processing chamber 326 to which the permeate is supplied, and a first reverse osmosis membrane 324 provided between the first concentration chamber 322 and the first processing chamber 326. Though not illustrated, the first reverse osmosis device 320 may further includes a pressurization device for pressurizing the water-leached solution in the first concentration chamber 322. As such, the water-leached solution is supplied to the first concentration chamber 322, the permeate is supplied to the first processing chamber 326, and by pressurizing the water-leached solution with the pressurization device, the water in the first concentration chamber 322 is moved to the first processing chamber 326, thereby the water-leached solution in the first concentration chamber 322 can be concentrated. The permeate may be a distilled water.

Likewise, the second reverse osmosis device 340 includes a second concentration chamber 342 to which the water-leached solution is supplied, a second processing chamber 346 to which the permeate is supplied, and a second reverse osmosis membrane 344 provided between the second concentration chamber 342 and the second processing chamber 346. Though not illustrated, the second reverse osmosis device 340 may further includes a pressurization device for pressurizing the water-leached solution in the second concentration chamber 342.

During the reverse osmosis process in either the first reverse osmosis device 320 or the second reverse osmosis device 340, flushing is performed in the other reverse osmosis device. That is, when the reverse osmosis is performed and the water-leached solution is supplied to the first reverse osmosis device 320, flushing of the reverse osmosis membrane is performed in the second reverse osmosis device 340 by providing pure water or a detergent to the second reverse osmosis device 340, instead of the water-leached solution. The reverse osmosis process and the flushing process of the first reverse osmosis device 320 and the second reverse osmosis device 340 are alternately performed. This ensures that the metal and other impurities adhering to the surface of the reverse osmosis membrane are periodically cleaned, thereby preventing scaling.

According to the embodiment, the permeate used in the reverse osmosis in the RO concentration unit 300 may be supplied to the water-leaching unit 200 to be used for the water-leaching. By doing so, the amount of water supplied separately for the water leaching can be reduced.

According to an embodiment, the gas containing carbon dioxide may be supplied to the water-leached solution to lower the pH of the water-leached solution. This is preferrable because the high pH of the water-leaching solution imposes limitations on the final concentration achievable in the RO concentration unit 300, leading to scaling issue. By lowering the pH of the water-leached solution, the final concentration that can be achieved in the RO concentration unit 300 increases, thus improving the efficiency of the RO concentration process.

For reference, the table 2 provides the concentration multiples operable in the RO concentration unit according to the pH of the water-leached solution. "O" indicates that the operation with the corresponding concentration multiples is feasible at the given pH, while "X" indicates that the operation with the corresponding concentration multiples is not feasible at the given pH due to scaling issues. The table 3 provides concentration changes of the carbonate ion and the hydrogen carbonate ion which are present when operating the RO concentration unit with the concentration multiples according to the pH of the water-leached solution.

**[Table 2]**

| concentration multiples | Li(ppm) | pH 8.2 | pH 9.0 | pH 9.5 | pH 10 | pH 11 |
|---|---|---|---|---|---|---|
| 1.0 | 1,400 | O | O | O | O | O |
| 1.1 | 1,600 | O | O | O | O | O |
| 1.3 | 1,800 | O | O | O | O | O |
| 2.1 | 3,000 | O | O | O | O | X |
| 3.6 | 5,000 | O | X | X | X | X |

**[Table 3]**

| Concentration multiples | Li (ppm) | pH9 | | pH9.5 | | pH10 | | pH11 | |
|---|---|---|---|---|---|---|---|---|---|
| | | CO3 (ppm) | HCO3 (ppm) | CO3 (ppm) | HCO3 (ppm) | CO3 (ppm) | HCO3 (ppm) | CO3 (ppm) | HCO3 (ppm) |
| 1.0 | 1,400 | 2,338 | 7,551 | 4,494 | 3,117 | 5,485 | 1,140 | 5,938 | 120 |
| 1.1 | 1,600 | 3,384 | 7,182 | 5,408 | 3,274 | 6,346 | 1,146 | 6,802 | 119 |
| 1.3 | 1,800 | 4,062 | 7,557 | 6,086 | 3,390 | 7,212 | 1,141 | 7,666 | 118 |
| 2.1 | 3,000 | 8,913 | 8,224 | 10,188 | 6,186 | 12,454 | 1,031 | 12,861 | 105 |

The solubility of the lithium carbonate (Li2CO3) is 13.2g/100mL (Ksp = 2.5x10-2) at 25°C, and the solubility of the lithium hydrogencarbonate (LiHCO3) is high, therefore, the lithium hydrogencarbonate does not form crystals. Meanwhile, the concentrations of the carbonate ion and the hydrogen carbonate ion contained in the water-leached solution change according to the pH. For example, when concentrating the water-leached solution, of which the concentration of the lithium ion is 1,400ppm at the PH of 11, about 2.1 times, the scaling may be formed by crystallization in the course of the RO concentration since the concentration of the lithium ion is 3,000 ppm, and the concentration of the carbonate ion is 12,861 ppm, which are more than the solubility of the lithium carbonate. However, when adjusting the water-leached solution to have a pH 9 and then concentrating the water-leached solution about 2.1 times, the concentration of the lithium ion is 3,000 ppm, and the concentration of the carbonate ion is 8,913 ppm, which are less than the solubility of the lithium carbonate, thereby the concern of the scaling to occur is diminished. As such, by adjusting the pH of the water-leached solution to be lower, it is possible to increase the concentration multiples of the lithium ion. If only the lithium ion and the carbonate ion are present in the solution, theoretically, the possibility of crystallization of the lithium carbonate is low at the pH of 9.0 or less, however, in the actual RO concentration evaluation, in the condition of pH 10 or less, the lithium has been concentrated to 3,000 ppm without the occurrence of scaling. That is estimated to be blended effects of other ions contained in the solution, such as hydrogen carbonate ion and sulfateion. As described above, if increasing the concentration of the lithium ion two times through the RO concentration, the energy expense taken in the concentration/ crystallization at the following stage may be lowered by 50%, enhancing economy of the lithium recovery process.

The pH of the water-leached solution to which the gas containing carbon dioxide is supplied may be 10 or less. In particular, it is preferable that the lithium ion is concentrated to 3,000 ppm or more in the RO concentration unit 300, as the gas containing carbon dioxide is supplied, and therefore, the pH of the water-leached solution is adjusted to 9 or less. As such, it is possible to manufacture the lithium solution having a high concentration by using the RO concentration, which consumes less energy compared to the evaporation/concentration.

In FIG. 1, it is illustrated that the gas containing carbon dioxide is supplied to the water-leached solution contained in the water-leaching unit 200. However, the present disclosure is not limited to such embodiment, and the gas containing carbon dioxide may be supplied to the water-leached solution discharged from the water-leaching unit 200.

The crystallization unit 400 is configured to crystallize the lithium carbonate by increasing the temperature of the concentrated solution which has been concentrated in the RO concentration unit 300. The crystallization unit 400 may crystallize the lithium carbonate by heating the concentrated solution at about 60°C to 80°C.

The separation unit 500 is configured to perform solid-liquid separation of the crystallization filtrate which has not been crystallized and the lithium carbonate which has been crystallized in the crystallization unit 400. In order to reuse the lithium ion contained in the crystallization filtrate, the crystallization filtrate may be merged with the water-leached solution, and then supplied to the RO concentration unit 300 again. To this end, a main flow path 510 is provided, through which the crystallization filtrate flows from the separation unit 500 to a merging part 530. At the merging part 530, the crystallization filtrate is merged with the water-leached solution.

In general, since the temperature allowing the entry to the RO concentration unit 300 is 40°C or less, the crystallization filtrate having a high temperature must be cooled before entering the RO concentration unit 300. According to an embodiment, the crystallization filtrate discharged from the separation unit 500 may be cooled by using the concentrated solution discharged from the RO concentration unit 300. To this end, the present disclosure may further include the heat exchange unit 600, in which the crystallization filtrate discharged from the separation unit 500 and the concentrated solution discharged from the RO concentration unit 300 exchange heat each other. For example, the temperature of the crystallization filtrate which has been separated in the separation unit 500 is about 80°C, and the temperature of the concentrated solution which has been discharged from the RO concentration unit 300 is about 20°C. Through the heat exchange between the crystallization filtrate and the concentrated solution in the heat exchange unit 600, the heat may be transferred from the crystallization filtrate to the concentrated solution. Through this heat exchange, the temperature of the crystallization filtrate may be lowered to satisfy the temperature required for the entry into the RO concentration unit 300. Also, the temperature of the concentrated solution may be heightened, thereby reducing the energy expense necessary for the crystallization to be performed in the later stage. For example, the temperature of the crystallization filtrate may change from about 80°C to 20°C, and the temperature of the concentrated solution may change from about 20°C to 70°C.

According to an embodiment, additionally, a bypass flow path 520 may be branched from the main flow path 510. Within this bypass flow path 520, an ion exchange resin 700 may be provided. The bypass flow path 520 may be branched from the main flow path 510, and then may be merged to the main flow path 510. Or, the bypass flow path 520 may be merged at the merging part 530 allowing merging with the water-leached solution. According to an embodiment, a portion of the crystallization filtrate, preferably ranging from 10% to 30%, is directed to the bypass flow path 520, where it passes through the ion exchange resin 700. By way of using the bypass flow path 520 and the ion exchange resin 700, it becomes possible to suppress the increase of the impurities caused by reuse of the crystallization filtrate. As the number of reuse of the crystallization filtrate increases, the concentration of the ionic impurities (e.g., calcium ion, magnesium ion, etc.) contained in the crystallization filtrate may increase. The concentration of the impurities may be effectively controlled by treating a portion of the crystallization filtrate with the weak acid cation exchange resin in the ion exchange resin 700 before it is reused (i.e., before it returns to the main flow path 510 or is merged with the merging part 530).

According to an embodiment, an aqueous lithium hydroxide solution may be formed by allowing the crystallized lithium carbonate and hydroxide salt (e.g., calcium hydroxide, sodium hydroxide, barium hydroxide, etc.) to react with each other. The formation of lithium hydroxide (LiOH) may be achieved through processes such as evaporation, concentration, and crystallization, or through process of involving mixing with ethanol followed by crystallization, among other methods.

In addition, according to an embodiment, the formation of the lithium hydroxide (LiOH) may be achieved, without crystallizing the lithium carbonate in the crystallization unit 400 after passing through the RO concentration unit 300. This may be achieved by generating the aqueous lithium hydroxide solution through the reaction between the concentrated solution and the sodium hydroxide. Subsequently, the process can involve evaporation, concentration, and crystallization, or it may involve mixing with ethanol followed by crystallization, among other methods.

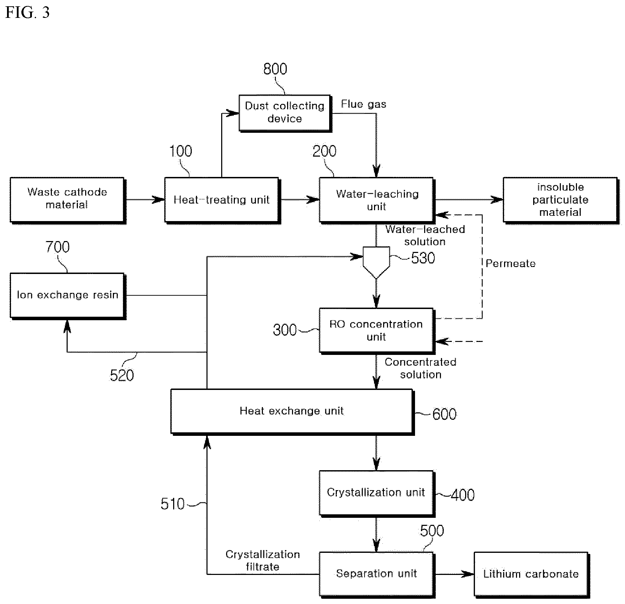

Next, referring to FIG. 3, the system for recovering lithium according to a second embodiment of the present disclosure will be described.

The second embodiment includes the same configuration as that of the system for recovering lithium with reference to FIG. 1 except that it includes dust collecting device 800. The flue gas discharged from the heat-treating unit 100 after burning contains the carbon dioxide. That is, when burning the hydrocarbon fluid inside the heat treatment furnace of the heat-treating unit 100, the flue gas discharged from the heat-treating unit 100 contains carbon dioxide. According to the second embodiment of the present invention, this flue gas containing carbon dioxide is utilized. This eliminates a need to supply the gas containing carbon dioxide separately.

Therefore, according to the second embodiment, the flue gas passes through the dust collecting device 800 and then is supplied to the water-leached solution. The dust collecting device 800 may be separately installed between the heat-treating unit 100 and the water-leaching unit 200. However, according to an embodiment, a dust collecting device may be installed inside the heat-treating unit 100 as a part.

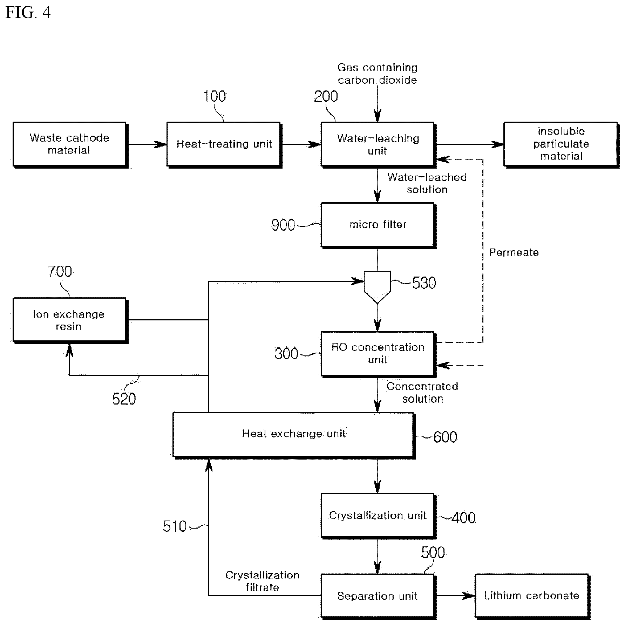

Last, with reference to FIG. 4, the system for recovering lithium according to a third embodiment of the present disclosure will be described.

The third embodiment includes the same configuration as that of the system for recovering lithium described with reference to FIG. 1 except that it further includes a micro filter 900. The micro filter 900 may be located between the water-leaching unit 200 and the RO concentration unit 300.

The water-leached solution may contain about 10 ppm or more than 100 ppm of anions such as fluoride ion, sulfate ion, and the like depending on a content of a binder and the like contained in the waste cathode material. Also, it may contain cations such as calcium ion and the like by a few ppm in the water-leached solution. The cations may form calcium fluoride in the solution. Alternatively, for the purpose of removing the fluoride ion, calcium ion may be additionally supplied by injection of calcium hydroxide (Ca(OH)2). The solubility of the calcium fluoride (CaF2) is very low in the high pH range of pH 7 or more, therefore, crystals of the calcium fluoride (CaF2) may be formed.

By having the micro filter 900 before the water-leached solution enters the RO concentration unit 300, the crystallized particulate materials may be filtered. This allows the concentration of the lithium ion to be stably performed in the RO concentration unit 300.

The present disclosure is not limited to the specific exemplary embodiments and descriptions, various modifications can be made by any person skilled in the art to which the present disclosure pertains without departing from the subject matter of the present disclosure as claimed in the claims, and the modifications are within the scope defined by the claims. Also, it is noted that any one feature of an embodiment of the present disclosure described in the specification may be applied to another embodiment of the present disclosure. Similarly, the present invention encompasses any embodiment that combines features of one embodiment and features of another embodiment.

### REFERENCE NUMERALS

100: heat-treating unit
200: water-leaching unit
300: RO concentration unit
320: first reverse osmosis device
322: first concentration chamber
324: first reverse osmosis membrane
326: first processing chamber
340: second reverse osmosis device
342: second concentration chamber
344: second reverse osmosis membrane
346: second processing chamber
400: crystallization unit
500: separation unit
510: main flow path
520: bypass flow path
530: merging part
600: heat exchange unit
700: ion exchange resin
800: dust collecting device
900: micro filter

## Claims

1. A system for recovering lithium of a waste cathode material, comprising:
a heat-treating unit configured to heat-treat a waste cathode material to convert into soluble and insoluble materials;
a water-leaching unit configured to leach the heat-treated waste cathode material with water to separate into an insoluble material and a water-leached solution comprising a lithium ion and a carbonate ion; and
an reverse osmosis, RO, concentration unit configured to concentrate the water-leached solution using reverse osmosis,
wherein the water-leaching unit is configured to separate the water-leached solution with a concentration of lithium ion of 2,000 ppm or less.

2. The system for recovering lithium of a waste cathode material of claim 1,
wherein in the water-leaching unit, a powder of the waste cathode material which is heat-treated in the heat-treating unit is water-leached with water at a weight ratio of 1:30 to 1:100.

3. The system for recovering lithium of a waste cathode material of claim 1 or 2,
wherein the system is configured to supply a gas containing carbon dioxide to the water-leached solution.

4. The system for recovering lithium of a waste cathode material of claim 3,
wherein the gas containing carbon dioxide is a flue gas which is generated and discharged from the heat-treating unit; and/or
wherein the system is configured to supply the gas containing carbon dioxide from the heat-treating unit to the water-leached solution and/or to the water-leaching unit.

5. The system for recovering lithium of a waste cathode material of claim 3 or 4,
wherein the system comprises a dust collecting device through which the gas containing carbon dioxide passes before being supplied to the water-leached solution.

6. The system for recovering lithium of a waste cathode material of claim 3, 4 or 5,
wherein a pH of the water-leached solution to which the gas containing carbon dioxide is supplied is equal to or less than 10.

7. The system for recovering lithium of a waste cathode material of claim 6,
wherein the RO concentration unit is configured to increase the concentration of lithium ions is to 3,000ppm or more.

8. The system for recovering lithium of a waste cathode material according to any one of the preceding claims,
wherein the RO concentration unit comprises a first reverse osmosis device and a second reverse osmosis device, and when reverse osmosis is performed in one among the first reverse osmosis device and the second reverse osmosis device, flushing is performed in the other reverse osmosis device.

9. The system for recovering lithium of a waste cathode material according to any one of the preceding claims,
wherein the system is configured to supply permeate which is used for reverse osmosis in the RO concentration unit to the water-leaching unit.

10. The system for recovering lithium of a waste cathode material according to any one of the preceding claims, further comprising:
a crystallization unit configured to increase a temperature of concentrated solution which is concentrated in the RO concentration unit to crystallize lithium carbonate,
wherein a crystallization filtrate which is not crystallized in the crystallization unit is merged with the water-leached solution discharged from the water-leaching unit and then is supplied to the RO concentration unit.

11. The system for recovering lithium of a waste cathode material of claim 10, further comprising:
a heat exchange unit configured to allow heat exchange to be performed between the crystallization filtrate and the concentrated solution discharged from the RO concentration unit.

12. The system for recovering lithium of a waste cathode material of claim 11,
wherein the heat exchange unit is configured to cool the crystallization filtrate to 40°C or lower.

13. The system for recovering lithium of a waste cathode material of claim 10, 11 or 12, further comprising:
a separation unit configured to perform solid-liquid separation of the lithium carbonate crystallized in the crystallization unit and the crystallization filtrate,
a merging part at which the crystallization filtrate is merged with the water-leached solution discharged from the water-leaching unit,
a main flow path through which the crystallization filtrate flows from the separation unit to the merging part,
a bypass flow path branched from the main flow path, and
an ion exchange resin provided in the bypass flow path.

14. The system for recovering lithium of a waste cathode material of claim 13,
wherein a portion of the crystallization filtrate separated in the separation unit is supplied to the bypass flow path, passes through the ion exchange resin and then merged with the water-leached solution.

15. The system for recovering lithium of a waste cathode material according to any one of the preceding claims, further comprising:
a micro filter provided between the water-leaching unit and the RO concentration unit.
